# EUROPÄISCHE PATENTANMELDUNG

(11) **EP 1 900 698 A1**
(43) Veröffentlichungstag der Anmeldung: **19.03.2008**
(21) Anmeldenummer: 07017881.9
(22) Anmeldetag: 12.09.2007
(51) Int. Cl.: C03C 11/00, B01D 35/06

(54) **Synthetisch hergestelltes Schaumglas und Filtervorrichtung**

(30) Priorität: 12.09.2006 DE 102006044012
(71) Anmelder: Roth, Roland, 64850 Schaafheim (DE)
(72) Erfinder: Roth, Roland, 64850 Schaafheim (DE)
(74) Vertreter: Katscher Habermann Patentanwälte

(57) **Zusammenfassung**

Ein synthetisch hergestelltes Schaumglas enthält einen Zusatz aus magnetisierbarem Material. Das magnetisierbare Material besteht überwiegend aus ferromagnetischen Stoffen, wie Eisen, Nickel oder Kobalt. Der Zusatz an magnetisierbarem Material beträgt zwischen 0,01 und 50 Gewichtsprozent und ist homogen in dem Schaumglas verteilt. Eine Filtervorrichtung (1) mit einem fluiddurchlässigen Gehäuse (2) weist darin enthaltene Formkörper (6) aus magnetisierbarem Schaumglas auf. Ein externes elektromagnetisches Feld wirkt auf die Formkörper (6) aus magnetisierbarem Schaumglas ein.

## Beschreibung

Die Erfindung betrifft ein synthetisch hergestelltes Schaumglas.

Mit Schaumglas wird ein erstarrter Glasschaum mit luftdicht geschlossenen Zellen bezeichnet, die mit Gas gefüllt sind. Schaumgläser natürlichen Ursprungs sind beispielsweise Tuffe, Bimssand, Bimskies oder Blähton. Solche natürlichen Schaumgläser sind seit langem wegen ihrer besonderen Eigenschaften bekannt und werden auf Grund ihrer Festigkeit in Verbindung mit der geringen Dichte beispielsweise gerne als Isoliermaterial oder isolierendes Baumaterial verwendet.

Auch die künstliche Herstellung von synthetischem Schaumglas ist bekannt. In Abhängigkeit von den vorgegebenen Anforderungen bzw. den gewünschten Eigenschaften des Schaumglases wurden verschiedene Herstellungsverfahren entwickelt.

Aus DE 39 41 737 C2 ist beispielsweise ein Verfahren zur kontinuierlichen Herstellung von Schaumglas-Formkörpern bekannt. Auf Grund seiner geringen Dichte eignet sich Schaumglas auch als Filtermaterial.

In DE 195 20 367 A1 wird die Verwendung eines Filtermaterials insbesondere als Wasserfilter beschrieben, welches Schaumglas als wesentlichen Bestandteil des Filtermaterials aufweist.

Jeweils im Hinblick auf die vorgesehene Verwendung und die dadurch bedingten Anforderungen wird versucht, durch eine gezielte Veränderung des Glasmaterials oder des schaumbildenden Bestandteils in Verbindung mit unterschiedlichen Herstellungsverfahren die Eigenschaften des synthetisch hergestellten Schaumglases bestmöglich anzupassen.

Aufgabe der vorliegenden Erfindung ist es, ein synthetisch hergestelltes Schaumglas so auszugestalten, dass die Filterwirkung des Schaumglases verbessert und dessen Handhabung bei Filterverfahren erleichtert wird.

Diese Aufgabe wird erfindungsgemäß dadurch gelöst, dass das Schaumglas einen Zusatz aus magnetisierbarem Material enthält. Es hat sich gezeigt, dass ein magnetisches Schaumglas eine merklich bessere Filterwirkung aufweist. Dabei wird die verbesserte Filtereigenschaft nicht ausschließlich bei bereits selbst magnetischen oder zumindest magnetisierbaren Stoffen bzw. Verunreinigungen erzielt, sondern auch bei wenig oder nicht magnetisierbaren Partikeln.

Gemäß einer vorteilhaften Ausgestaltung des Erfindungsgedankens ist vorgesehen, dass das magnetisierbare Material überwiegend aus ferromagnetischen Stoffen besteht. Insbesondere die Metalle Eisen, Nickel oder Kobalt sind in Pulverform oder in Form von kleinkörnigen Partikeln als Zuschlagsstoff für das synthetisch hergestellte Schaumglas geeignet.

Es hat sich gezeigt, dass eine vorteilhafte Filterwirkung dadurch verstärkt wird, dass das magnetisierbare Material homogen in dem Schaumglas verteilt ist. Herstellungsbedingt oder im Hinblick auf spezielle Verwendungsanforderungen kann vorgesehen sein, dass das magnetisierbare Material lediglich bereichsweise eine homogene Verteilung oder aber eine vorgegebene, bzw. zufällig eintretende inhomogene Verteilung aufweist.

Vorzugsweise ist vorgesehen, dass der Zusatz an magnetisierbarem Material zwischen 0,01 und 50 Gewichtsprozent beträgt. Je geringer der Anteil des magnetisierbaren Materials ist, umso leichter ist das Filtermaterial. Dagegen hängt die Verbesserung der Filtereigenschaften mit einer Zunahme des magnetisierbaren Materials zusammen. Der für den jeweiligen Einzelfall geeignete Anteil des magnetisierbaren Materials im Schaumglas kann in Abhängigkeit von den gewünschten Filtereigenschaften und den Anforderungen hinsichtlich der Dichte des Filtermaterials bzw. des Gewichts der Filterelemente ermittelt und vorgegeben werden.

Die Erfindung betrifft auch eine Filtervorrichtung mit einem fluiddurchlässigen Gehäuse und mit darin enthaltenen Formkörpern aus Schaumglas. Die Formkörper können dabei beispielsweise ein Granulat mit einer vorgegebenen bzw. weitgehend beliebigen Körnung sein. Es ist auch denkbar, dass die Filtervorrichtung lediglich einen oder einige wenige Formkörper wie beispielsweise dünnwandige Platten oder Röhren aus Schaumglas enthält. Natürlich sind auch Formkörper mit einer komplexen Geometrie denkbar.

Erfindungsgemäß ist vorgesehen, dass das in der Filtervorrichtung verwendete Schaumglas ein magnetisierbares Schaumglas mit den vorangehend beschriebenen Eigenschaften ist. Eine derartige Filtervorrichtung kann unmittelbar in einer Fluidströmung angeordnet werden. Das durch das fluiddurchlässige Gehäuse hindurchströmende Fluid umströmt die darin enthaltenen Formkörper aus Schaumglas und wird dabei gefiltert. Durch die magnetischen Eigenschaften des Schaumglases wird die Filterwirkung verstärkt. Alternativ kann auch das Volumen der Filtervorrichtung bei gleich bleibender Filterwirkung und Effizienz verringert werden.

Untersuchungen haben ergeben, dass die Filterwirkung zusätzlich dadurch gesteigert werden kann, dass ein externes elektromagnetisches Feld erzeugbar ist, welches auf die Formkörper aus magnetisierbarem Schaumglas einwirkt. So werden beispielsweise elektrisch leitende kleine Partikel verstärkt in einem Granulat aus magnetischem Schaumglas zurückgehalten, wenn ein äußeres elektrisches Feld auf das magnetisierbare Schaumglas einwirkt.

Externe elektromagnetische Felder können auch dazu verwendet werden, die Magnetisierung des magnetisierbaren Schaumglases zu erzeugen, aufrechtzuerhalten oder zu verstärken. Auch kann durch die Einwirkung externer elektromagnetischer Felder eine unerwünschte Entmagnetisierung des bereits magnetisierten Schaumglases, beispielsweise bei hohen Temperaturen oder starken Erschütterungen, reduziert oder sogar vollständig vermieden werden.

Vorzugsweise ist vorgesehen, dass das externe elektromagnetische Feld ein elektrostatisches Feld ist. Elektrostatische Felder können ohne großen konstruktiven Aufwand erzeugt werden. Die dafür erforderlichen Geräte und Bauelemente können gegebenenfalls in der Filtervorrichtung oder unmittelbar benachbart dazu angeordnet werden. Alternativ kann es auch zweckmäßig sein, ein wechselndes elektrisches Feld auf das magnetisierbare Schaumglas einwirken zu lassen.

Gemäß einer besonders vorteilhaften Ausgestaltung des Erfindungsgedankens ist vorgesehen, dass das Gehäuse im Wesentlichen aus einer einen Hohlkörper bildenden äußeren Elektrode und einer oder mehreren inneren Elektrode besteht und die Formkörper aus magnetisierbarem Schaumglas in einem Innenraum der äußeren Elektrode angeordnet sind und die eine oder mehreren inneren Elektroden umgeben. Die äußere Elektrode wird zweckmäßigerweise geerdet, um eine unerwünschte Potentialdifferenz mit der Umgebung bei Anlegen eines elektrischen Feldes zu vermeiden. Die innere Elektrode wird entweder auf eine gleich bleibende oder wechselnde Potentialdifferenz zu der äußeren Elektrode eingestellt. Das dadurch erzeugte elektrische Feld wirkt auf die darin befindlichen Formkörper aus magnetisierbarem Schaumglas ein und führt zu einer merklichen Verbesserung der Filterwirkung des Schaumglases.

Eine Elektrode kann hohlzylindrisch oder als beliebig geformter Hohlkörper ausgestaltet sein. Es ist ebenfalls möglich, dass eine oder beide Elektroden als eine flache, gewölbte oder wellige Ebene ausgestaltet ist. Es ist denkbar, dass eine oder mehrere innere Elektroden im Innenraum der hohlzylindrischen Elektrode, bzw. der als Hohlkörper gestalteten Elektrode nahezu beliebig angeordnet sind. Es können auch mehrere Elektroden im Abstand zueinander und gegebenenfalls zu der flachen, gewölbten oder welligen Elektrode angeordnet sein.

Nachfolgend werden zwei Ausführungsbeispiele näher erläutert, die in der Zeichnung dargestellt sind. Es zeigt:
Fig. 1 eine schematische Schnittansicht einer zylindrischen Filtervorrichtung und
Fig. 2 eine schematische Seitenansicht einer plattenförmigen Filtervorrichtung.

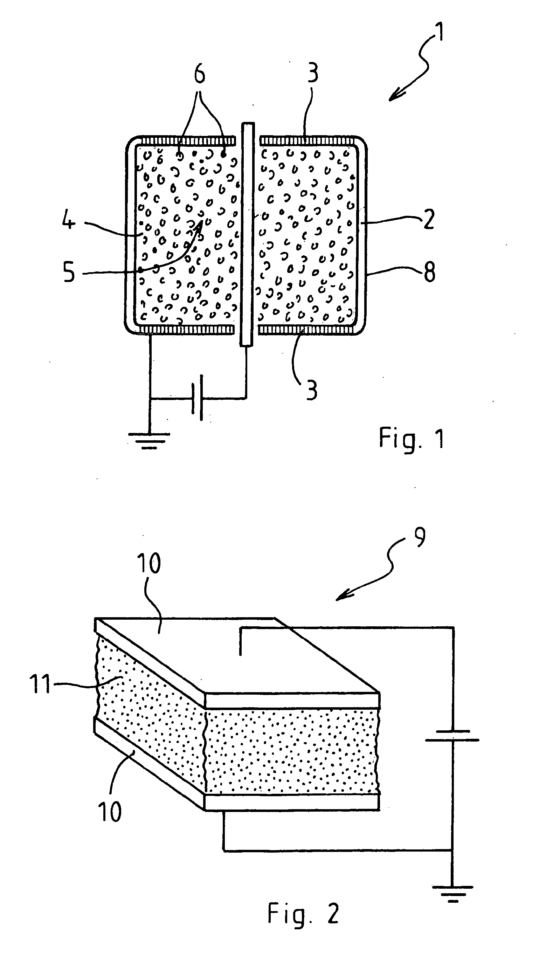

Die in der Fig. 1 schematisch dargestellte Filtervorrichtung 1 weist ein zylinderförmiges Gehäuse 2 auf, dessen kreisförmige Stirnseiten 3 für Fluide durchlässig ausgestaltet sind. Ein Innenraum 4 des Gehäuses 2 ist mit einer losen Schüttung aus einem Granulat 5 von Formkörpern 6 aus magnetisierbarem Schaumglas gefüllt. Die einzelnen Formkörper 6 sind dabei wesentlich kleiner als der Innenraum 4 des Gehäuses 2.

Elektrisch isoliert von dem Gehäuse 2 ist im Innenraum 4 mittig und axial eine stabförmige innere Elektrode 7 angeordnet. Das Gehäuse 2 kann wie in dem beschriebenen Ausführungsbeispiel vollständig oder aber bereichsweise als äußere Elektrode 8 ausgestaltet sein. Der inneren Elektrode 7 und der äußeren Elektrode 8 kann mit einer lediglich schematisch angedeuteten externen Spannungsquelleneinrichtung eine Potentialdifferenz angelegt werden. Dabei wird die äußere Elektrode 8 bzw. das Gehäuse 2 zweckmäßigerweise geerdet bzw. auf einem Null-Potential gehalten.

Um die Filterwirkung des Materials 5 von Formkörpern 6 aus Schaumglas zu erhöhen, wird das Schaumglas entweder einmalig vor Benutzungsaufnahme oder in Abständen magnetisiert. Es hat sich gezeigt, dass bereits durch die Magnetisierung des Schaumglases eine verbesserte Filterwirkung eintritt.

Die Filterwirkung kann darüber hinaus gesteigert werden, wenn zwischen der inneren Elektrode 7 und der äußeren Elektrode 8 eine Potentialdifferenz angelegt wird, so dass ein elektrisches Feld auf die Formkörper 6 aus magnetisiertem Schaumglas einwirkt.

Das zu filternde Fluid tritt an einer der beiden Stirnseiten 3 in die Filtervorrichtung 1 ein, durchströmt das Gehäuse 2 und wird dabei gefiltert. An der entgegengesetzten Stirnseite 3 kann das gefilterte Fluid das Gehäuse 2 bzw. die Filtervorrichtung wieder verlassen.

Die in Fig. 2 dargestellte Filtervorrichtung 9 weist einen im Wesentlichen plattenförmigen Aufbau auf. Zwischen zwei Elektroden 10 ist eine Schicht 11 aus magnetisierbarem Schaumglas angeordnet. Magnetisiertes Schaumglas kann dabei ebenfalls in Form eines Granulats zwischen den beiden Elektroden 10 angeordnet sein. Die beiden Elektroden 10 stehen über eine nicht dargestellte Spannungsquelle elektrisch leitend in Verbindung, so dass zwischen den beiden Elektroden 10 eine Potentialdifferenz und damit ein elektrisches Feld erzeugt werden kann.

Ausgehend von der in Fig. 2 dargestellten Anordnung von Elektroden 10 kann eine komplexe Filtervorrichtung auch mehrere parallel oder in Reihe angeordnete plattenförmigen Elektrodenanordnungen aufweisen, deren Potentialdifferenz unabhängig voneinander vorgegeben werden kann.

Die in Fig. 2 dargestellte Filtervorrichtung 9 sollte zweckmäßigerweise von einem nicht dargestellten, abschirmenden Gehäuse umgeben sein.

Es hat sich gezeigt, dass die verbesserte Filterwirkung sowohl bei dem Anlegen einer fest vorgegebenen Potentialdifferenz als auch durch Einwirkung eines sich ständig ändernden elektrischen Feldes auf das magnetisierte Schaumglas erzielt werden kann.

## Patentansprüche

1. Synthetisch hergestellte Schaumglas, **dadurch gekennzeichnet, dass** das Schaumglas einen Zusatz aus magnetisierbarem Material enthält.

2. Synthetisch hergestelltes Schaumglas nach Anspruch 1, **dadurch gekennzeichnet, dass** das magnetisierbare Material überwiegend aus ferromagnetischen Stoffen besteht.

3. Synthetisch hergestelltes Schaumglas nach Anspruch 1 oder Anspruch 2, **dadurch gekennzeichnet, dass** das magnetisierbare Material homogen in dem Schaumglas verteilt ist.

4. Synthetisch hergestellte Schaumglas nach einem der vorangehenden Ansprüche, **dadurch gekennzeichnet, dass** der Zusatz an magnetisierbarem Material zwischen 0,01 und 50 Gewichtsprozent beträgt.

5. Filtervorrichtung mit einem fluiddurchlässigen Gehäuse und mit darin enthaltenen Formkörpern (6) aus Schaumglas, **dadurch gekennzeichnet, dass** das Schaumglas ein magnetisierbares Schaumglas nach einem der Ansprüche 1-4 ist.

6. Filtervorrichtung nach Anspruch 5, **dadurch gekennzeichnet, dass** ein externes elektromagnetisches Feld erzeugbar ist, welches auf die Formkörper (6) aus magnetisierbarem Schaumglas einwirkt.

7. Filtervorrichtung nach Anspruch 6, **dadurch gekennzeichnet, dass** das externe elektrische Feld ein elektrostatisches Feld ist.

8. Filtervorrichtung nach Anspruch 6 oder Anspruch 7, **dadurch gekennzeichnet, dass** das Gehäuse (2) im Wesentlichen aus einer einen Hohlkörper bildenden äußeren Elektrode (8) und einer oder mehreren inneren Elektroden (7) besteht und die Formkörper (6) aus magnetisierbarem Schaumglas in einem Innenraum (4) der äußeren Elektrode (8) angeordnet sind und die eine oder mehreren inneren Elektroden (7) umgeben.
